# EUROPÄISCHE PATENTSCHRIFT

(11) **EP 3 787 900 B1**
(45) Veröffentlichungstag und Bekanntmachung des Hinweises auf die Patenterteilung: **25.12.2024**
(21) Anmeldenummer: 19716774.5
(22) Anmeldetag: 26.03.2019
(51) Int. Cl.: B41F 33/00, G01N 21/952, G06T 7/00

(54) **VERFAHREN ZUM ÜBERPRÜFEN EINES DRUCKZYLINDERS UND EINE ENTSPRECHENDE ANORDNUNG**
METHOD FOR TESTING A PRINTING CYLINDER AND CORRESPONDING DEVICE
MÉTHODE D'INVESTIGATION D'UN CYLINDRE POUR IMPRIMER ET DISPOSITIF CORRESPONDANT

(30) Priorität: 04.05.2018 DE 102018110749
(43) Veröffentlichungstag der Anmeldung: 10.03.2021
(73) Patentinhaber: Matthews International GmbH, 47059 Duisburg (DE)
(72) Erfinder: KLIMMEY, Konrad, 48691 Vreden (DE); SCHMIDT, Daniel, 48683 Ahaus (DE)
(74) Vertreter: Jones Day
(86) Internationale Anmeldenummer: PCT/DE2019/100280
(87) Internationale Veröffentlichungsnummer: WO 2019/210899

(56) Entgegenhaltungen:
- JP-A- 2002 254 590
- JP-A- 2007 040 732
- JP-A- H11 142 342

## Beschreibung

Die Erfindung geht aus von einem Vorrichtung zum Überprüfen eines Druckzylinders auf Fehler in einer Zylinderoberfläche des Druckzylinders, vorzugsweise in einer gravierten Zylinderoberfläche des Druckzylinders, welche aus der JP 2007 040732 A bekannt ist. Ferner ist ein Verfahren zum Überprüfen eines Druckzylinders auf Fehler in einer Zylinderoberfläche sowie eine Anordnung zur Ausführung des Verfahrens aus der EP 1 785 275 A2 bekannt. Ein ähnliches Verfahren und Vorrichtungen sind auch in der WO 2008/049510 A1 beziehungsweise in der JP H11 142342A und JP 2002 254590 A beschrieben.

Bei der Fertigung von Druckzylindern stellt die Qualitätskontrolle durch ihre bislang manuelle Ausführung einen großen Kostenfaktor dar. Ein besonderer Nachteil besteht dann, wenn Fehler erst in einem sehr späten Fertigungsstadium entdeckt werden. Daher liegt das Bestreben darin, einerseits Fehler zu reduzieren und andererseits Fehler bereits in einem früheren Stadium zu erkennen. Dadurch kann auf einen späteren Andruckprozess zur Fehlererkennung verzichtet werden.

Aus dem genannten Stand der Technik sind dazu Verfahren bekannt, bei denen jeweils nach unterschiedlichen Verfahrensschritten bei der Druckzylinderherstellung Aufnahmen der Druckzylinderoberfläche gemacht werden, welche dann jeweils mit einer Referenzabbildung verglichen werden. So wird beispielsweise nach der Beschichtung und dem Polieren des Druckzylinders ein erstes Bild aufgenommen, um Defekte im polierten Material zu erkennen. Eine weitere Abbildung wird nach einem Gravurvorgang aufgenommen, um Defekte in der Vielzahl eingebrachter Näpfchen zu erkennen. Eine erneute Aufnahme wird erzeugt, nachdem eine verschleißarme Beschichtung bzw. Chromierung auf den Druckzylinder aufgebracht wurde.

Die bekannten Verfahren haben den Nachteil, dass die von den Druckzylindern aufgenommenen Abbildungen mitunter Fehler abbilden können, die nicht auf fehlerhafte Stellen im Druckzylinder zurückzuführen sind, sondern einen anderen Ursprung haben. So kann es vorkommen, dass sich vor der Aufnahme von Abbildungen Schmutz, insbesondere Staubpartikel, auf der Zylinderoberfläche abgelagert haben kann. Solche sogenannten nicht reproduzierbaren Pseudofehler werden dann fälschlicherweise in die Bewertung der Druckzylinderoberfläche mit einbezogen und führen dementsprechend zu einem unkorrekten Ergebnis.

Es ist daher die Aufgabe der Erfindung, ein Verfahren zur Überprüfung eines Druckzylinders sowie eine zur Ausführung des Verfahrens geeignete Anordnung derart weiterzuentwickeln dass es eine hohe Genauigkeit aufweist und insbesondere den zuverlässigen Ausschluss von Pseudofehlern erlaubt.

Die Aufgabe der Erfindung wird durch ein Verfahren mit den Merkmalen des Anspruchs 1 beziehungsweise durch eine Anordnung mit den Merkmalen des Anspruchs 9 gelöst. Vorteilhafte Ausführungsformen der Erfindung sind jeweils Gegenstand der abhängigen Ansprüche.

Demgemäß weist das Verfahren die Schritte auf:
- Aufnehmen eines ersten und mindestens eines weiteren digitalen Abbilds einer Zylinderoberfläche eines Druckzylinders mittels einer optischen Erfassungseinheit, wobei die Zylinderoberfläche vor der mindestens einen weiteren Aufnahme gereinigt wird,
- Abgleichen der digitalen Abbilder jeweils mit einer digitalen Gravurvorlage des Druckzylinders, wobei das Abgleichen aufweist:
   - Ermitteln von Abweichungen zwischen jeweils einem der digitalen Abbilder und der digitalen Gravurvorlage und
   - Prüfen der ermittelten Abweichungen auf übereinstimmende Abweichungen zwischen den digitalen Abbildern,
wobei auf Pseudofehler geschlossen wird, wenn bei dem Abgleichen keine übereinstimmenden Abweichungen zwischen den digitalen Abbildern festgestellt worden sind, und wobei bei übereinstimmenden Abweichungen auf einen Gravurfehler auf dem Druckzylinder geschlossen wird.

In vorteilhafter Weise kann das Reinigen der Zylinderoberfläche manuell oder berührungslos durch Beaufschlagen mit Druckluft erfolgen, wobei Staubpartikel von der Zylinderoberfläche entfernt oder auf der Zylinderoberfläche zumindest umverteilt werden. Das Reinigen kann beispielsweise durch Beaufschlagen mit ionisierter Druckluft erfolgen.

Das Aufnehmen der digitalen Abbilder kann weiterhin das Rotieren des Druckzylinders, das spaltenweise Erfassen des rotierenden Druckzylinders mittels einer Kamera und das relative Verfahren der Kamera in Axialrichtung des Druckzylinders umfassen. Dabei kann die Kamera eine Zeilenkamera sein.

Dabei kann das Aufnehmen des ersten und jedes weiteren digitalen Abbilds das Aufnehmen von zumindest einer Hellfeldaufnahme aufweisen, bei der die Zylinderoberfläche unter einem Winkel zwischen 0° und 30° zur optischen Erfassungsachse der optischen Erfassungseinheit beleuchtet wird.

Außerdem kann das Aufnehmen des ersten und jedes weiteren digitalen Abbilds das Aufnehmen von zumindest einer Dunkelfeldaufnahme aufweisen, bei der die Zylinderoberfläche unter einem Winkel zwischen 30° und 60° zur optischen Erfassungsachse der optischen Erfassungseinheit beleuchtet wird.

Weiterhin kann das Verfahren den Schritt aufweisen:
- Erzeugen einer druckähnlichen Darstellung aus zumindest einer Hellfeldaufnahme der Zylinderoberfläche und zumindest einer Dunkelfeldaufnahme der Zylinderoberfläche, wobei das Erzeugen aufweist:
   - Extrahieren einer Maske für einen nicht druckenden Bereich des Druckzylinders aus schwarzen Flächen der Dunkelfeldaufnahme, und
   - Anwenden der Maske auf den nicht druckenden Bereich des Druckzylinders in der Hellfeldaufnahme zur Helligkeitsanpassung durch Verschiebung des Weißpunkts.

Dabei kann ferner für das Extrahieren der Maske ein Binärbild aus der Dunkelfeldaufnahme abgeleitet werden, wobei in den Bereichen, welche in der Dunkelfeldaufnahme schwarz sind, in der Hellfeldaufnahme der durchschnittliche Helligkeitswert ermittelt wird, anhand welchem eine Helligkeitsanpassung mittels Weißpunktverschiebung vorgenommen wird.

Das Verfahren kann ferner auch die folgenden Schritte aufweisen:
- Erzeugen einer druckähnlichen Darstellung aus zumindest einer Hellfeldaufnahme der Zylinderoberfläche, wobei das Erzeugen aufweist:
- Ermitteln eines lokalen Maximums eines gegenüber einem dunkleren Bereich hellen Bereichs im Helligkeitshistogramm der zumindest einen Hellfeldaufnahme,
- wobei der helle Bereich einem nicht druckenden Oberflächenbereich des Druckzylinders entspricht;
- Bestimmen einer Distanz, um die der Weißpunkt verschoben wird, vorzugsweise um ein Vielfaches einer Standartabweichung; und
- Verschieben des Weißpunkts in der zumindest einen Hellfeldaufnahme um die bestimme Distanz.

Eine erfindungsgemäße Anordnung zum Überprüfen eines Druckzylinders auf Fehler in einer Gravur des Druckzylinders, welche zum Ausführen des Verfahren nach einem der vorangehenden Ansprüche eingerichtet ist, weist eine optische Erfassungseinheit auf, welche entlang einer Längsachse eines rotatorisch gelagerten Druckzylinders mittels einer Verstelleinheit linear verstellbar, auf einen zu erfassenden Bereich der Druckzylinderoberfläche gerichtet und über eine Tragvorrichtung mit der Verstelleinheit verbunden ist. Dabei weist die optische Erfassungseinheit weiterhin eine oder mehrere Lichtquellen auf, welche in unterschiedlichen Winkelstellungen zur Druckzylinderoberfläche auf den zu erfassenden Bereich ausrichtbar oder ausgerichtet sind.

Erfindungsgemäß weist die Anordnung ferner eine Reinigungsvorrichtung zum Reinigen der Zylinderoberfläche auf. Dabei kann die Reinigungsvorrichtung eine Druckluftquelle zum berührungslosen Reinigen mit ionisierter Druckluft aufweisen.

Weiterhin ist von Vorteil, wenn eine erste der Lichtquellen der optischen Erfassungseinheit unter einem Winkel von 0° bis 30° zur optischen Erfassungsachse der optischen Erfassungseinheit auf die Zylinderoberfläche ausgerichtet ist.

Darüber hinaus kann die erste Lichtquelle verschwenkbar gelagert sein, wobei die Lichtquelle in einer ersten Position in der optischen Erfassungsachse der optischen Erfassungseinheit angeordnet ist und in einer zweiten Position aus der optischen Erfassungsachse der optischen Erfassungseinheit herausgeschwenkt ist.

Außerdem kann mindestens eine weitere der Lichtquellen der optischen Erfassungseinheit unter einem Winkel von 30° bis 60° zur optischen Erfassungsachse der optischen Erfassungseinheit auf die Zylinderoberfläche gerichtet sein.

Für eine besonders gute Ausleuchtung kann mindestens eine weitere Lichtquelle zwei Teillichtquellen aufweisen, die gegenüberliegend und symmetrisch zur optischen Erfassungsachse angeordnet sind.

Dabei kann die mindestens eine Lichtquelle eine rechteckige und unquadratische Lichtaustrittsöffnung aufweisen, deren Längsabmessung in auf die Zylinderoberfläche ausgerichteter Position parallel zur Zylinderoberfläche verläuft. Die Lichtquelle kann jedoch auch eine freigeformte Lichtaustrittsöffnung aufweisen.

Die Bildaufnahmeeinrichtung kann ferner in zwei Achsen senkrecht zur Zylinderachse relativ zur Zylinderoberfläche verstellbar sein. Weiterhin kann die optische Erfassungseinheit eine Zeilenkamera aufweisen, die dazu eingerichtet ist, den rotierenden Druckzylinder spaltenweise zu erfassen.

Im Folgenden wird die Erfindung anhand der in den nachstehenden Figuren gezeigten beispielhaften Ausführungsformen näher erläutert. Es zeigt:
- Fig. 1: einen schematischen Verfahrensablauf für die Überprüfung eines Druckzylinders gemäß einer Ausführungsform der Erfindung;
- Fig. 2: einen schematischen Verfahrensablauf für die Überprüfung eines Druckzylinders gemäß einer weiteren Ausführungsform der Erfindung;
- Fig. 3: einen schematischen Verfahrensablauf zur Aufnahme eines Abbilds einer Druckzylinderoberfläche;
- Fig. 4: beispielhaft einen gravierten Druckzylinder;
- Fig. 5: eine erfindungsgemäße Anordnung beim Erfassen einer Hellfeldaufnahme;
- Fig. 6: die erfindungsgemäße Anordnung beim Erfassen einer Dunkelfeldaufnahme;
- Fig. 7: eine Frontalansicht der optischen Erfassungseinheit
- Fig. 8: eine Abbildung der optischen Erfassungseinheit mit linearer Verstelleinheit;
- Fig. 9: beispielhafte Abbildungen von Hell- und Dunkelfeldaufnahmen;
- Fig. 10: beispielhafte Abbildungen von Hellfeld- und Dunkelfeldaufnahmen, einer Weißpunktverschiebung sowie einer druckähnlichen Darstellung;
- Fig. 11: beispielhafte Abbildungen einer Hellfeldaufnahme sowie einer druckähnlichen Darstellung;
- Fig. 12: vergleichende Abbildungen von einem Ausdruck, einer Hellfeldaufnahme sowie einer Dunkelfeldaufnahme;
- Fig. 13: eine Ausführungsform der optischen Erfassungseinrichtung mit Lichtquelle in der optischen Erfassungsachse;
- Fig. 14: eine Ausführungsform der optischen Erfassungseinrichtung mit aus der optischen Erfassungsachse herausgeschwenkter Lichtquelle.

Das Ziel der Zylinderinspektion besteht darin, Druckzylinder auf Fertigungsfehler zu untersuchen. Hierzu wird die Oberfläche des Zylinders zum Beispiel nach dem letzten Produktionsschritt, dem Verchromen, optisch erfasst und mit den Reproduktionsdaten, welche in einer Gravurdatei vorliegen können, verglichen. Abweichungen zwischen dem aufgenommenen Abbild und der Gravurvorlage werden anschließend automatisch berechnet und zur Bewertung angezeigt.

Ein weiteres Ziel der Zylinderinspektion besteht darin, Fehler in Druckzylinderoberflächen in einem möglichst frühen Fertigungsstadium zu detektieren. Dabei ist es möglich die Zylinderinspektion zwischen jedem Fertigungsschritt oder nach Fertigstellung des Druckzylinders durchzuführen.

Gleichzeitig besteht jedoch auch in der Minimierung von Rüstzeiten ein wesentlicher wirtschaftlicher Aspekt, da jede weitere Überprüfung längere Durchlaufzeiten und erhöhten Aufwand im Arbeitsablauf bedeutet. Weiterhin müsste bei zwei Überprüfungen die doppelte Anzahl an Maschinen zur Verfügung stehen, um das Produktionsvolumen abzudecken. Dementsprechend bietet sich insbesondere eine Überprüfung der Zylinder am Abschluss der Produktion an.

Ein großes Problem bei den Aufnahmen stellt insbesondere die Verschmutzung durch Staubpartikel dar, welche bei der nachfolgenden Fehlerauswertung nur schwer von tatsächlichen Fehlern unterschieden werden können. Um einen Großteil dieses Störeinflusses zu beseitigen, wird beim erfindungsgemäßen Verfahren die Zylinderoberfläche mindestens zweimal aufgenommen, wobei zwischen den Aufnahmen eine automatische Reinigung der Zylinderoberfläche durchgeführt wird. Bei der Auswertung können somit Prüfstellen, welche nur auf einer der Aufnahmen vorhanden sind, somit ignoriert werden, da es sich um entfernten oder zumindest umverteilten Schmutz beziehungsweise Staubpartikel handelt.

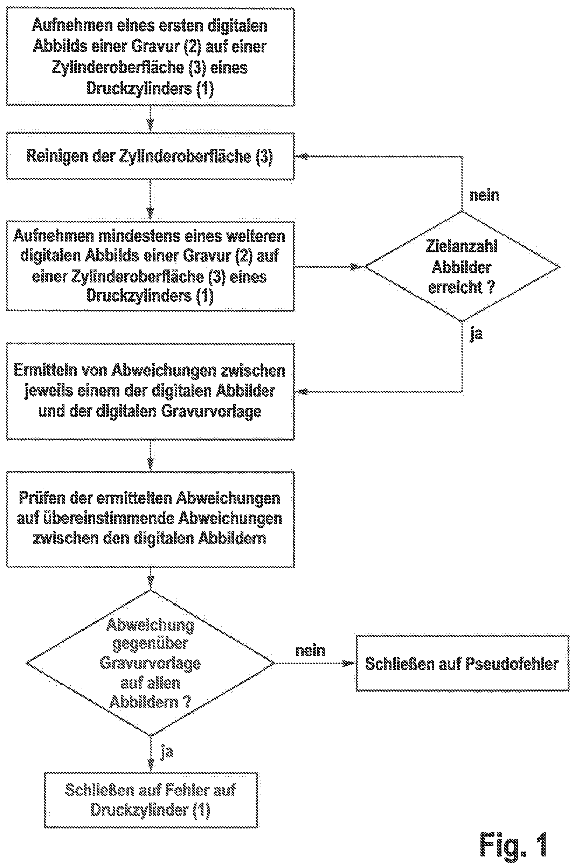

In Figur 1 ist der erfindungsgemäße Verfahrensablauf dargestellt. Dabei erfolgt zunächst eine Aufnahme eines ersten digitalen Abbilds einer Gravur 2 auf einer Zylinderoberfläche 3 eines Druckzylinders 1, beispielsweise kann der Druckzylinder in Rotation versetzt und mit einer Zeilenkamera spaltenweise erfasst werden. Zu Beseitigung von Schmutz wird anschließend die Zylinderoberfläche 3 gereinigt, beispielsweise mit ionisierter Druckluft. Anschließend erfolgt die Aufnahme mindestens eines weiteren digitalen Abbilds der Gravur 2. Wahlweise können noch weitere Aufnahmen gemacht werden, wobei jedoch die Zylinderoberfläche 3 vor der mindestens jeder weiteren Aufnahme gereinigt wird. Danach werden Abweichungen zwischen jeweils einem der digitalen Abbilder und der digitalen Gravurvorlage ermittelt und die ermittelten Abweichungen auf übereinstimmende Abweichungen zwischen den digitalen Abbildern geprüft. Sofern eine Abweichung gegenüber der Gravurvorlage auf allen Abbildern sichtbar ist, kann auf einen Fehler auf dem Druckzylinder geschlossen werden. Andernfalls, wenn ein Fehler nur auf einem der Abbilder sichtbar ist, kann ein tatsächlicher Fehler ausgeschlossen werden, sodass dieser vermeintliche Fehler als Pseudofehler bewertet wird.

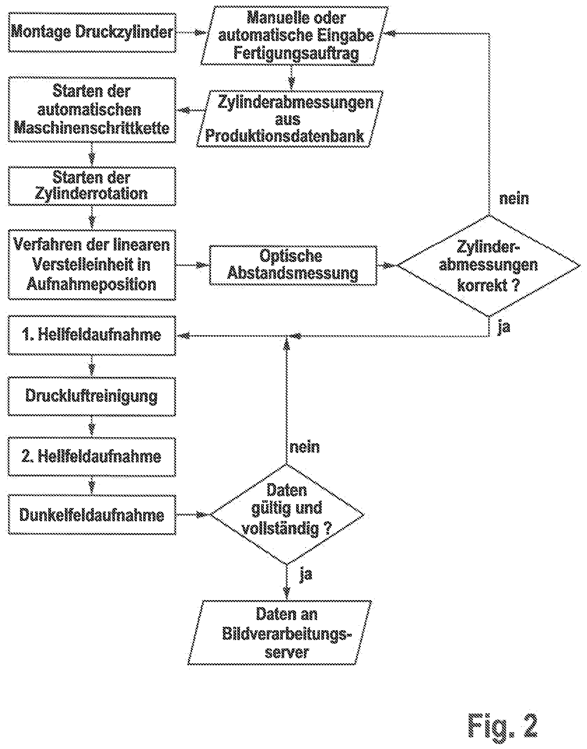

Figur 2 zeigt einen schematischen Verfahrensablauf einer weiteren Ausführungsform der Druckzylinderinspektion zur Überprüfung einer Zylinderoberfläche 3. Dazu wird zunächst ein zu prüfender Druckzylinder 1 in die Maschinenspindel der Prüfvorrichtung montiert. Anschließend erfolgt die Eingabe der Fertigungsdaten, wobei insbesondere die Zylinderabmessungen in die Maschinensteuerung eingegeben werden. Anschließend wird an der optischen Erfassungseinheit 4 die automatische Bildaufnahme gestartet und gleichzeitig der Zylinder 1 in Rotation versetzt. Nun wird die optische Erfassungseinheit 4 über die lineare Verstelleinheit 10 in die Aufnahmeposition gefahren und eine optische Abstandsmessung zwischen optischer Erfassungseinheit 4 und Druckzylinderoberfläche 3 durchgeführt. Sind die Abmessungen nicht korrekt, erfolgt eine erneute manuelle Eingabe der Fertigungsdaten. Sind die Abmessungen hingegen korrekt, wird mit der Durchführung der ersten Hellfeldaufnahme 5 begonnen. Dabei wird der rotierenden Druckzylinder 1 spaltenweise von der Zeilenkamera 15 erfasst und diese mittels linearer Verstelleinheit 10 in Axialrichtung entlang des Druckzylinders 1 verfahren. Bei der Hellfeldaufnahme 5 ist dabei die Beleuchtung parallel oder koaxial zur Kamera 15 und senkrecht auf die Zylinderoberfläche 3 ausgerichtet. Nach Beendigung der ersten Hellfeldaufnahme 5 erfolgt eine Druckluftreinigung der Zylinderoberfläche 3 mittels ionisierter Druckluft, wobei die Druckluftvorrichtung ebenfalls über die lineare Verstelleinheit 10 axial entlang dem Zylinder 1 verfahrbar ist. Entsprechend der ersten Hellfeldaufnahme 5 erfolgt in gleicher Vorgehensweise nun das Aufnehmen einer zweiten Hellfeldaufnahme 5. Bei der darauffolgenden Dunkelfeldaufnahme 7 wird die für die Hellfeldaufnahme verwendete Lichtquelle 12.1 abgeschaltet und die Lichtquelle 12.2 der Dunkelfeldaufnahme eingeschaltet. Diese strahlt demgegenüber in einem Winkel von 30-60° zur optischen Erfassungsachse 6 der optischen Erfassungseinheit 4 auf die Zylinderoberfläche 3. Sind die erfassten Daten gültig und vollständig, folgt anschließend die Datenverarbeitung am Bildverarbeitungsserver. Sind die Daten hingegen ungültig oder unvollständig, wird der Bildaufnahmeprozess erneut mit der ersten Hellfeldaufnahme 5 begonnen. Danach erfolgt die Demontage des Druckzylinders aus der Maschinenspindel. Für jeden der drei Aufnahmevorgänge, zweimal Hellfeld 5 und einmal Dunkelfeld 7, besteht nun ein Datensatz mit den Bilddateien der einzelnen Spalten. Diese werden anschließend zu einem Gesamtbild der Zylinderoberfläche 3 zusammengefügt. Aus den schwarzen Flächen der Dunkelfeldaufnahme 7 wird zusätzlich eine Maske für den nicht druckenden Bereich extrahiert. Diese wird auf die Hellfeldaufnahme 5 angewendet, um den Weißpunkt anzupassen. Bei der Bildverarbeitung werden die drei Aufnahmen mittels sogenannter Feature Points an die Gravurdatei angepasst. Bei der anschließenden Fehlerfindung werden sowohl die beiden Hellfeldaufnahmen 5 als auch die Dunkelfeldaufnahme 7 zur Fehlersuche verwendet, da wie beschrieben die unterschiedlichen Beleuchtungen Fehler in unterschiedlicher Weise sichtbar machen können, sodass verschiedene Merkmale hervorgehoben werden. Abschließend werden die errechneten Fehler von geschultem Personal begutachtet und entsprechend in "Fehler" und "kein Fehler" klassifiziert.

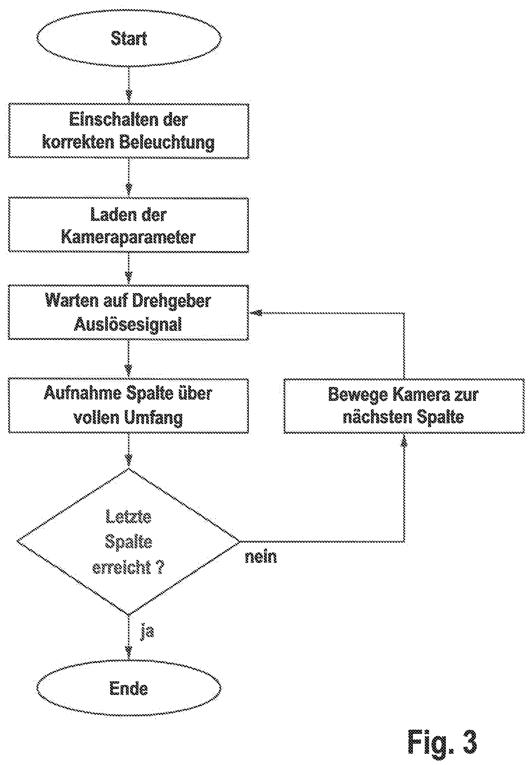

In Figur 3 ist der Verfahrensablauf einer Bildaufnahme schematisch dargestellt. Je nach Aufnahmeart einer Hellfeld- oder einer Dunkelfeldaufnahme 5, 7 wird zunächst die korrekte Beleuchtung eingeschaltet. Anschließend werden die dazu entsprechenden Kameraparameter geladen. Sobald der Drehgeber der Maschinenspindel ein Auslösesignal sendet, erfolgt die Aufnahme einer Spalte über den vollen Zylinderumfang. Sobald die letzte Spalte erreicht ist, wird der Bildaufnahmevorgang beendet. Ist die letzte Spalte noch nicht erreicht, wird die Kamera 15 zur nächsten Spalte bewegt und nach Auslösen des Drehgebersignals die nächste Spalte aufgenommen.

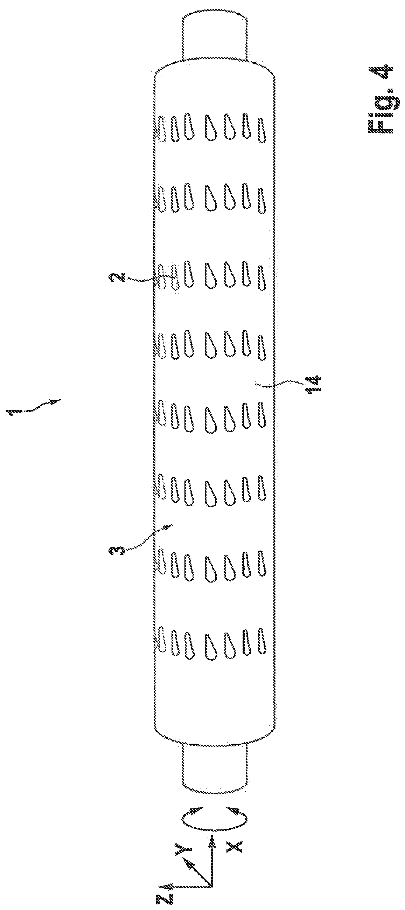

Figur 4 zeigt beispielhaft zu untersuchenden Druckzylinder 1. Dabei ist zu erkennen, dass die Zylinderoberfläche 3 zum einen einen unbebilderten und dementsprechend nicht druckenden Bereich 14 und zum anderen eine Gravur 2 aufweist, welche über die Breite sowie den gesamten Umfang der Zylinderoberfläche 3 in gleichmäßigen Abständen ein wiederkehrendes Gravurmuster aufweist. Der Druckzylinder 1 weist dabei eine Zylinderlängsachse X auf, welche im abgebildeten Koordinatensystem dargestellt ist. Die Achsen X, Y und Z geben ferner die Richtungen an, in welchen sich die optische Erfassungseinheit 4 relativ zur Druckzylinderoberfläche 3 beziehungsweise zum Druckzylinder 1 verstellen lässt. Ferner ist angezeigt dass der Druckzylinder 1 in zwei entgegengesetzten Richtungen rotierbar ist.

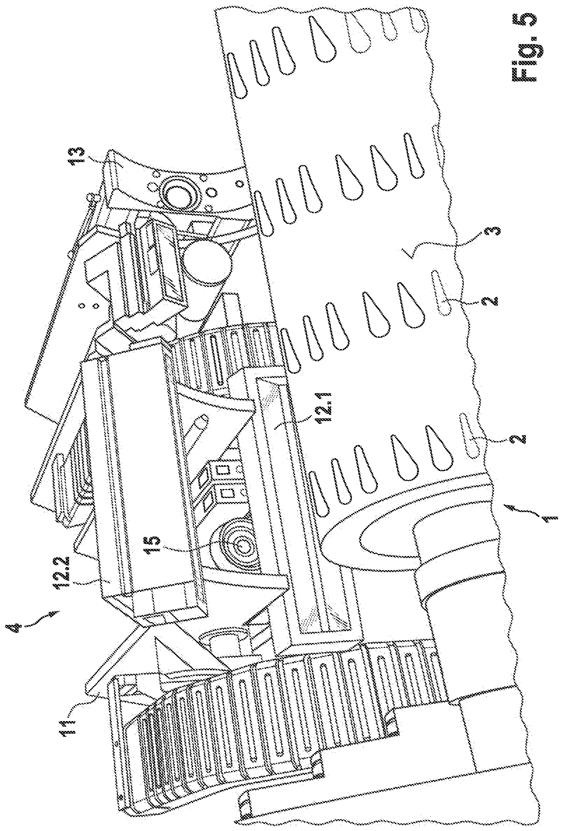

Figur 5 zeigt die erfindungsgemäße Anordnung während einer Hellfeldaufnahme 5 mit dem in der Maschinenspindel aufgenommenen und rotierenden Zylinder 1, welcher eine in die Zylinderoberfläche 3 eingebrachte Gravur 2 aufweist. Der Zylinderoberfläche 3 gegenüber angeordnet ist die optische Erfassungseinheit 4 zu erkennen, wobei die in der optischen Erfassungseinheit 4 aufgenommene Zeilenkamera 15 auf die Zylinderoberfläche 3 des Druckzylinders 1 gerichtet ist. Es ist zu erkennen, dass die optische Erfassungsachse 6 der Kamera 15 und die Lichtquelle 12.1 senkrecht zur Zylinderoberfläche 3 ausgerichtet sind. Die Kamera 15 ist über eine Tragvorrichtung 11 mit der linearen Verstelleinheit 10 verbunden und über diese parallel zur Zylinderachse X verfahrbar. Ferner ist mittels der linearen Verstelleinheit 10 die optische Erfassungseinheit 4 sowohl höhenverstellbar als auch im Abstand relativ zum Druckzylinder 1 einstellbar. Bei der in Figur 5 dargestellten Ausführungsform der Erfassung einer Hellfeldaufnahme 5 verläuft die Beleuchtungsrichtung der Lichtquelle 12.1 koaxial zur optischen Erfassungsachse 6 und die Lichtquelle 12.1 ist in der optischen Erfassungsachse 6 vor dem Kameraobjektiv angeordnet. Die Lichtquelle 12.1 weist dazu einen halbdurchlässigen Spiegel auf, mittels welchem einerseits Licht auf den zu erfassenden Bereich der Zylinderoberfläche 3 gelenkt wird und durch welchen andererseits das von der Zylinderoberfläche 3 reflektierte Licht in das Kameraobjektiv fällt. Darüber hinaus ist die für die Aufnahme der Dunkelfeldaufnahmen 7 vorgesehene Lichtquelle 12.2 zu erkennen, welche während der Hellfeldaufnahme 5 deaktiviert wird. Die Lichtquellen 12 sind wie die Kamera 15 ebenfalls an der Tragvorrichtung 11 befestigt. Ferner mit der Tragvorrichtung 11 verbunden und seitlich neben der optischen Erfassungseinheit 4 angeordnet ist eine Reinigungsvorrichtung 13, welche berührungslos mit ionisierter Druckluft zwischen den einzelnen Hellfeldaufnahmen 5 die Zylinderoberfläche 3 reinigt. Dazu wird die Reinigungsvorrichtung 13 über die lineare Verstelleinheit 10 entlang der Längsachse X des Druckzylinders vom einen Ende zum anderen Ende des Druckzylinders 1 verfahren und währenddessen mit Druckluft beaufschlagt. Gleichzeitig versetzt die Drehspindel den Druckzylinder 1 in Rotation, um alle Bereiche der Zylinderoberfläche 3 mit der Druckluft zu erfassen.

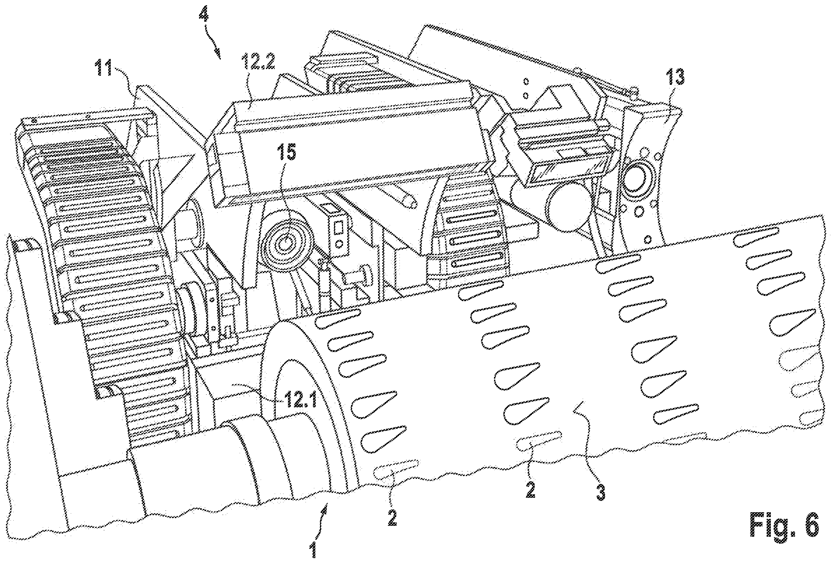

Auch Figur 6 zeigt die erfindungsgemäße Anordnung, wobei nun die Lichtquelle 12.1 vom Kameraobjektiv weggeklappt wurde, da nun die für die Dunkelfeldaufnahme 7 verwendete Lichtquellen 12.2 aktiviert ist, welche in einem anderen Winkel als die Lichtquelle 12.1 zur optischen Erfassungsachse 6 stehen Die Dunkelfeld-Teillichtquellen 12.2.1, 12.2.2 sind symmetrisch zur optischen Erfassungsachse 6 schräg oberhalb und schräg unterhalb des zu erfassenden Bereichs der Zylinderoberfläche 3 angeordnet.

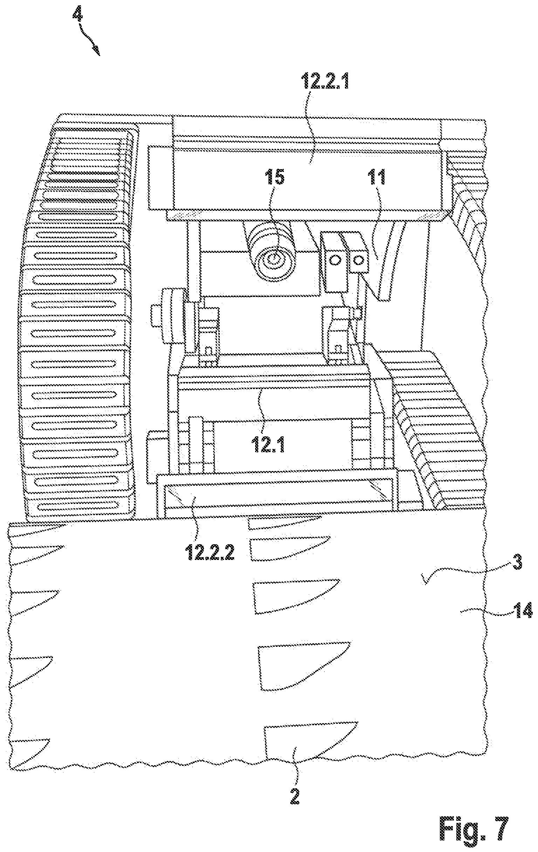

Figur 7 zeigt eine Frontalansicht der optischen Erfassungseinheit 4, wobei die Lichtquellen 12 sowie die die Zeilenkamera 15 an der Tragvorrichtung 11 befestigt sind, welche über die lineare Verstelleinheit 10 parallel zur Zylinderachse X verstellbar ist. Es ist zu erkennen, dass die Zeilenkamera 15 auf die Zylinderoberfläche 3 gerichtet ist, welche mehrere gravierte Bereiche 2 sowie einen nicht bebilderten Bereich 14 aufweist. Ferner ist zu erkennen, dass die zur Erzeugung eines Hellfelds vorgesehene Lichtquelle 12.1 aus der optischen Erfassungsachse 6 der Zeilenkamera 15 herausgeschwenkt ist, während die Teillichtquellen 12.2.1 und 12.2.2 der für die Erzeugung von Dunkelfeldaufnahmen zuständigen Lichtquelle 12.2 unter ihrem vorbestimmten Winkel auf die Zylinderoberfläche 3 gerichtet sind, sodass die optische Erfassungseinheit 4 in der dargestellten Abbildung zur Erzeugung einer Dunkelfeldaufnahme 7 bereit eingerichtet ist.

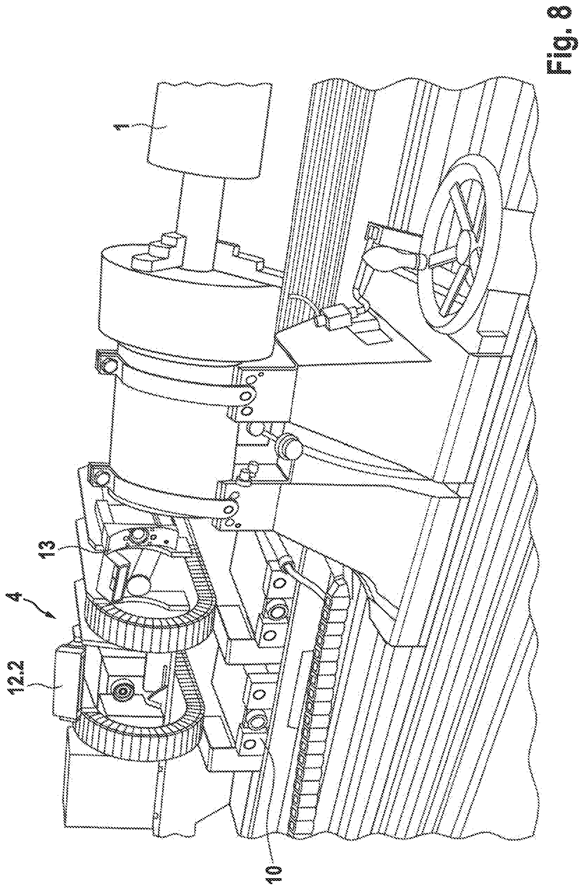

Figur 8 zeigt die optische Erfassungseinheit 4, welche über die lineare Verstelleinheit 10 parallel zur Zylinderachse X aus dem Bildaufnahmebereich herausgefahren ist und sich versetzt zur Maschinenspindel in einer Montageposition befindet. Dabei sind insbesondere die oberhalb und unterhalb der Kamera angeordneten Teillichtquellen 12.2.1,12.2.2 sowie die Reinigungsvorrichtung 13 zu erkennen.

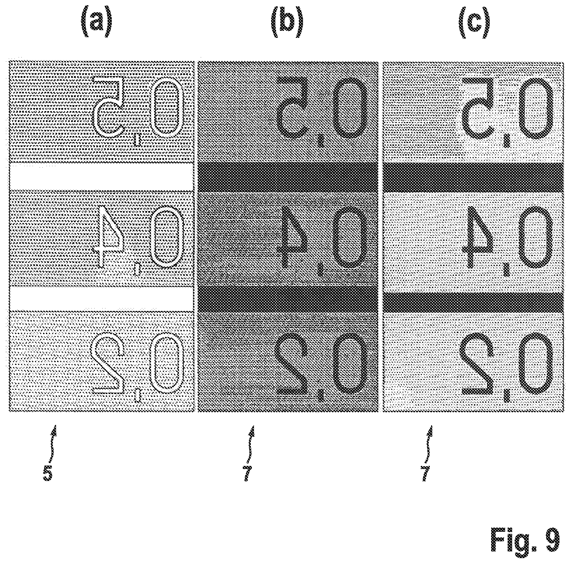

Zur Erfassung der Bilddaten wird vorzugsweise eine Zeilenkamera 15 verwendet, welche den rotierenden Zylinder 1 spaltenweise erfasst. Um dabei verschiedene Merkmale auf dem Zylinder 1 sichtbar zu machen, werden zwei verschiedene Belichtungswinkel α verwendet. Figur 9(a) zeigt dazu eine Hellfeldaufnahme 5, bei der die Beleuchtung 12 im selben Winkel wie Kamera 15 und senkrecht auf die Zylinderoberfläche 3 ausgerichtet ist. Die Figuren 9(b) und 9(c) zeigen jeweils Dunkelfeldaufnahmen 7 desselben Bildausschnitts, wobei Figur 9(b) unter einem Winkel von 30° gegenüber der optischen Erfassungsachse 6 der Kamera 15 und Figur 9(c) unter einem Winkel von 60° gegenüber der optischen Erfassungsachse 6 der Kamera 15 aufgenommen sind. Dabei ist zu erkennen, dass durch das unterschiedlich reflektierte Licht jeweils unterschiedliche Merkmale der gravierten Zylinderoberfläche 3 deutlicher hervortreten. Insbesondere erscheinen bei der Hellfeldaufnahme 5 die gravierten Bereiche dunkel und die nicht druckenden Bereiche hell, demgegenüber erscheinen bei der Dunkelfeldaufnahme 7 insbesondere die nicht druckenden Bereiche dunkel und die gravierten Bereiche je nach Winkelstellung der Beleuchtung 12 etwas heller.

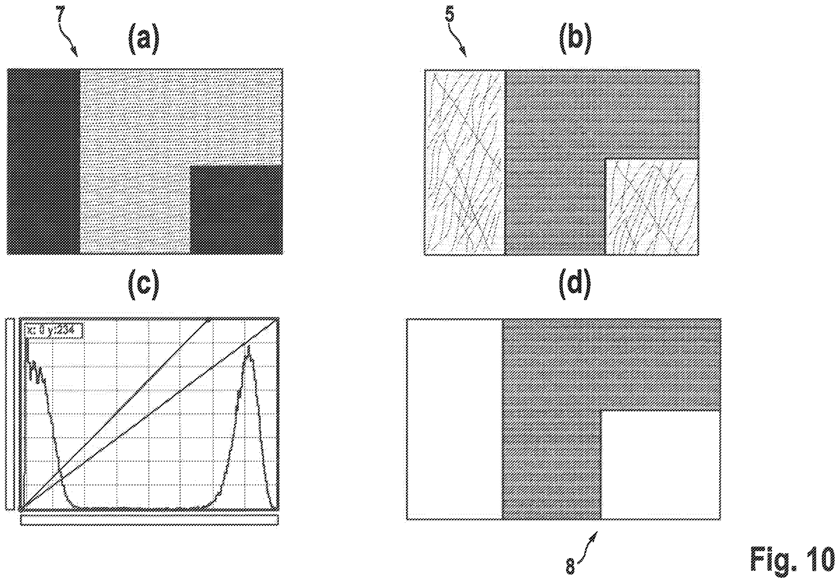

Die Figuren 10(a) bis 10(d) zeigen beispielhaft das Erzeugen einer Maske für die Helligkeitsanpassung zum Generieren einer druckähnlichen Darstellung 8. Die Figuren 10(a), (b) und (d) zeigen jeweils den gleichen Bildausschnitt. Dabei zeigt 10(a) eine Dunkelfeldaufnahme, 10(b) eine Hellfeldaufnahme und 10(d) das Endergebnis der Helligkeitsanpassung beziehungsweise die resultierende, gewünschte druckähnliche Darstellung 8. Die Helligkeitsanpassung dient dazu, dass die Helligkeitswerte der Aufnahmen denen der Reproduktionsdaten beziehungsweise der Gravurdatei entsprechen, um beim späteren Abgleich einen besseren Vergleich möglich zu machen. Hierzu müssen die Bereiche der glatten, nicht druckenden Oberfläche und der bildgebenden Vertiefungen mit unterschiedlichen Filterparametern bearbeitet werden. Um eine Trennung dieser Bereiche zu gewährleisten, wird aus dem Dunkelfeld ein Binärbild abgeleitet, da hier aufgrund der Beschaffenheit der Aufnahme eine klarere Trennung als bei der Hellfeldaufnahme 5 möglich ist. In den Bereichen, welche im Dunkelfeld schwarz sind, wird nun innerhalb der Hellfeldaufnahme 5 der durchschnittliche Helligkeitswert ermittelt. Anhand des Wertes erfolgt die Helligkeitsanpassung mittels Weißpunktverschiebung. Der Vorgang der Weißpunktverschiebung ist beispielhaft in Figur 10(c) gezeigt. Dadurch erhält man eine druckähnliche Darstellung, ohne wesentliche Merkmale durch übermäßiges Überstrahlen zu eliminieren.

Eine alternative Berechnung der Helligkeitsanpassung durch Weißpunktverschiebung ist auch ohne das Erzeugen einer Binärmaske aus dem Dunkelfeld umsetzbar. Dazu erfolgt eine Weißpunktanpassung über Peak-Detection im Histogramm. Hierzu werden anstelle der Dunkelfeldaufnahme 7 eine oder mehrere der Hellfeldaufnahmen 5 herangezogen. Im Histogramm wird dazu das lokale Maximum im höheren bzw. helleren Bereich gesucht. Dieser Bereich entspricht der in der Hellfeldaufnahme 5 heller dargestellten, nicht druckenden beziehungsweise nicht bebilderten Bereich14. Das lokale Maximum entspricht ungefähr dem Median des Bereichs. Nach Ermittlung dieses lokalen Maximums kann über verschiedene Algorithmen die Distanz berechnet werden, um die der Weißpunkt zur Erzielung der druckähnlichen Darstellung 8 verschoben werden soll.

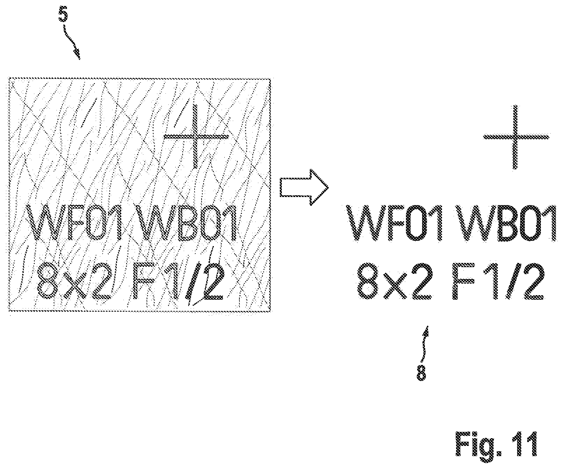

Figur 11 zeigt dazu an einem anderen Beispiel den Vergleich einer Hellfeldaufnahme 5 mit einer daraus und aus einer Dunkelfeldaufnahme desselben Bildausschnitts generierten druckähnlichen Darstellung 8. Gegenüber der Hellfeldaufnahme 5 ist die druckähnliche Darstellung 8 dabei insbesondere in den nicht druckenden Bereichen deutlich heller. Dies rührt daher, dass im nicht druckenden Bereich der Hellfeldaufnahme 5 zwar deutlich noch die Riefen des Poliervorgangs zu sehen sind, diese aber eine so geringe Tiefe aufweisen, dass sie im späteren Druckerzeugnis effektiv nicht zu sehen sind.

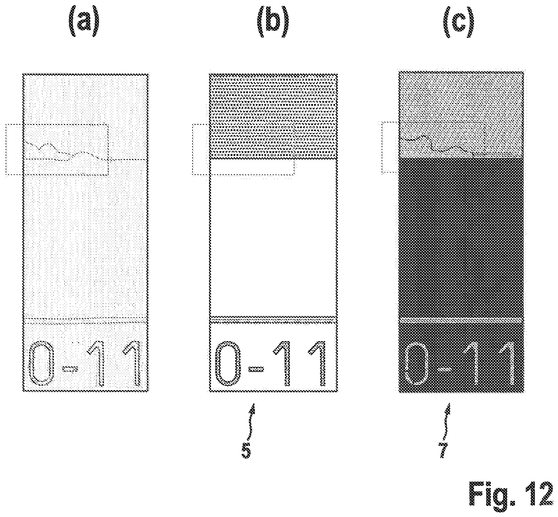

Die Figuren 12(a) bis (c) verdeutlichen einen weiteren Vorteil bei der Verwendung von sowohl Hellfeldaufnahmen 5 als auch Dunkelfeldaufnahmen 7. Figur 12(a) zeigt dabei ein fehlerhaftes Druckergebnis, die Figuren 12(b) und 12(c) jeweils eine Hellfeldaufnahme 5 und eine Dunkelfeldaufnahme 7 desselben Bildausschnitts.

Aufgrund der verschiedenen Reflexionswinkel beider Belichtungsverfahren werden jeweils unterschiedliche Merkmale auf dem Zylinder 1 sichtbar gemacht. Im Hellfeld sind Vertiefungen generell sehr dunkel, da hier das Licht zu großen Teilen nicht in die Optik reflektiert. Glatte Flächen hingegen reflektieren das Licht direkt zurück in die Optik. Beim Dunkelfeld verhält es sich gegenteilig, da hier die Vertiefungen heller sind, da aufgrund der Näpfchengeometrie mehr Licht in die Optik gelangt. In Verbindung mit den Hellfeldaufnahmen 5 lassen sich daher auch fehlerhaft produzierte Näpfchen erkennen. Des Weiteren ist es auch möglich Deformieren und Verstopfungen der Näpfchen sichtbar zu machen. Darüber hinaus lassen sich Produktionsfehler auf den nicht gravierten Bereichen detektieren..

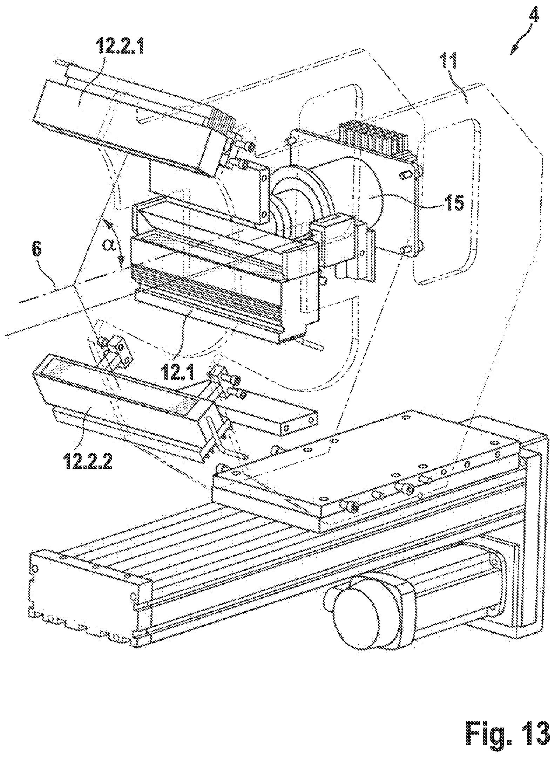

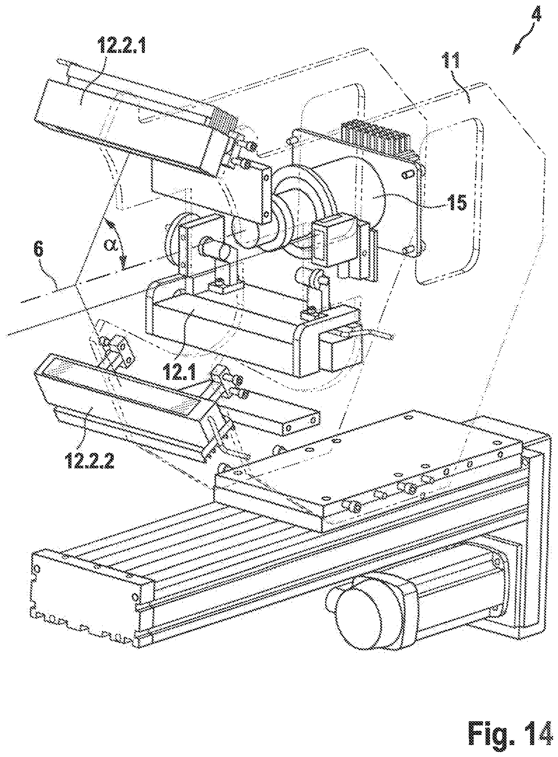

In den Figuren 13 und 14 ist eine Ausführungsform der optischen Erfassungseinheit 4 dargestellt. Die obere und untere LED-Beleuchtungszeile 12.2.1, 12.2.2 ist in einem festen Winkel α montiert und für die Beleuchtung bei Dunkelfeldaufnahmen 7 vorgesehen. Vor dem Objektiv der Kamera 15 ist eine Koaxialbeleuchtung 12.1 für die Beleuchtung bei Hellfeldaufnahmen 5 angeordnet, welche über einen pneumatischen Antrieb abgeklappt werden kann, wie in Figur 14 dargestellt. Die abklappbare Koaxialbeleuchtung 12.1 ist deswegen vorteilhaft, weil der halbdurchlässige Spiegel in der Koaxialbeleuchtung einerseits etwa 50 % der Lichtintensität nimmt und das Dunkelfeldverfahren außerdem eine sehr helle Beleuchtung benötigt. Somit kann die Koaxialbeleuchtung 12.1 aus der optischen Erfassungsachse 6 herausgeschwenkt werden, sobald die Koaxialbeleuchtung 12.1 deaktiviert ist und eine erhöhte Lichtintensität für die Dunkelfeldaufnahmen 7 benötigt wird.

### Bezugszeichenliste:

- 1: Druckzylinder
- 2: Gravur
- 3: Zylinderoberfläche
- 4: optische Erfassungseinheit
- 5: Hellfeldaufnahme
- 6: optische Erfassungsachse
- 7: Dunkelfeldaufnahme
- 8: Druckähnliche Darstellung
- 10: Lineare Verstelleinheit
- 11: Tragvorrichtung
- 12: Lichtquellen
- 12.1: Lichtquelle Hellfeld
- 12.2: Lichtquelle Dunkelfeld
- 12.2.1: Teillichtquelle Dunkelfeld
- 12.2.2: Teillichtquelle Dunkelfeld
- 13: Reinigungsvorrichtung
- 14: nicht bebilderter Bereich
- 15: Kamera
- X: Längsachse Druckzylinder
- α: Winkel Dunkelfeldbeleuchtung

## Patentansprüche

1. Verfahren zum Überprüfen eines Druckzylinders (1) auf Fehler in einer gravierten Zylinderoberfläche (3) des Druckzylinders (1), das die Schritte aufweist:
- Aufnehmen eines ersten und mindestens eines weiteren digitalen Abbilds einer Zylinderoberfläche (3) eines Druckzylinders (1) mittels einer optischen Erfassungseinheit (4), wobei die Zylinderoberfläche (3) vor der mindestens einen weiteren Aufnahme gereinigt wird,
- Abgleichen der digitalen Abbilder jeweils mit einer digitalen Gravurvorlage des Druckzylinders (1), wobei das Abgleichen aufweist:
- Ermitteln von Abweichungen zwischen jeweils einem der digitalen Abbilder und der digitalen Gravurvorlage und
- Prüfen der ermittelten Abweichungen auf übereinstimmende Abweichungen zwischen den digitalen Abbildern,
wobei auf einen Pseudofehler geschlossen wird, wenn bei dem Abgleichen keine übereinstimmenden Abweichungen zwischen den digitalen Abbildern festgestellt worden sind, und wobei bei übereinstimmenden Abweichungen auf einen Gravurfehler auf dem Druckzylinder (1) geschlossen wird.

2. Verfahren nach Anspruch 1, wobei das Reinigen der Zylinderoberfläche (3) manuelles oder berührungslos und vorzugsweise durch Beaufschlagen mit ionisierter Druckluft erfolgt, wobei Staubpartikel von der Zylinderoberfläche entfernt oder auf der Zylinderoberfläche zumindest umverteilt werden.

3. Verfahren nach Anspruch 1 oder 2, wobei das Aufnehmen der digitalen Abbilder das Rotieren des Druckzylinders (1), das spaltenweise optische Erfassen des rotierenden Druckzylinders (1) mittels einer Kamera (15), vorzugsweise einer Zeilenkamera, und das relative Verfahren der Kamera (15) in Axialrichtung des Druckzylinders (1) umfasst.

4. Verfahren nach einem der vorangegangenen Ansprüche, wobei das Aufnehmen des ersten und jedes weiteren digitalen Abbilds das Aufnehmen von zumindest einer Hellfeldaufnahme (5) aufweist, bei der die Zylinderoberfläche (3) unter einem Winkel zwischen 0° und 30° zur optischen Erfassungsachse (6) der optischen Erfassungseinheit (4) beleuchtet wird.

5. Verfahren nach einem der vorangegangenen Ansprüche, wobei das Aufnehmen des ersten und jedes weiteren digitalen Abbilds das Aufnehmen von zumindest einer Dunkelfeldaufnahme (7) aufweist, bei der die Zylinderoberfläche (3) unter einem Winkel (a) zwischen 30° und 60° zur optischen Erfassungsachse (6) der optischen Erfassungseinheit (4) beleuchtet wird.

6. Verfahren nach einem der vorangegangenen Ansprüche, das ferner den Schritt aufweist:
- Erzeugen einer druckähnlichen Darstellung (8) aus zumindest einer Hellfeldaufnahme (5) der Zylinderoberfläche (3) und zumindest einer Dunkelfeldaufnahme (7) der Zylinderoberfläche (3), wobei das Erzeugen aufweist:
- Extrahieren einer Maske für einen nicht druckenden Bereich des Druckzylinders (1) aus schwarzen Flächen der Dunkelfeldaufnahme (7), und
- Anwenden der Maske auf den nicht druckenden Bereich des Druckzylinders (1) in der Hellfeldaufnahme (5) zur Helligkeitsanpassung durch Verschiebung des Weißpunkts.

7. Verfahren nach Anspruch 6, wobei für das Extrahieren der Maske ein Binärbild aus der Dunkelfeldaufnahme (7) abgeleitet wird, wobei in den Bereichen, welche in der Dunkelfeldaufnahme (7) schwarz sind, in der Hellfeldaufnahme (5) der durchschnittliche Helligkeitswert ermittelt wird, anhand welchem eine Helligkeitsanpassung mittels Weißpunktverschiebung vorgenommen wird.

8. Verfahren nach einem der vorangegangenen Ansprüche, das ferner den Schritt aufweist:
- Erzeugen einer druckähnlichen Darstellung (8) aus zumindest einer Hellfeldaufnahme (5) der Zylinderoberfläche (3), wobei das Erzeugen aufweist:
- Ermitteln eines lokalen Maximums eines gegenüber einem dunkleren Bereich hellen Bereichs im Helligkeitshistogramm der zumindest einen Hellfeldaufnahme (5), wobei der helle Bereich einem nicht druckenden Oberflächenbereich des Druckzylinders (1) entspricht;
- Bestimmen einer Distanz, um die der Weißpunkt verschoben wird, vorzugsweise um ein Vielfaches einer Standartabweichung; und
- Verschieben des Weißpunkts in der zumindest einen Hellfeldaufnahme (5) um die bestimme Distanz.

9. Anordnung zum Überprüfen eines Druckzylinders (1) auf Fehler in einer gravierten Zylinderoberfläche (3) des Druckzylinders (1), eingerichtet zum Ausführen des Verfahrens nach einem der vorangehenden Ansprüche, mit einer optischen Erfassungseinheit (4), welche entlang einer Längsachse (X) eines rotatorisch gelagerten Druckzylinders (1) mittels einer Verstelleinheit (10) linear verstellbar ist, und auf einen zu erfassenden Bereich der Druckzylinderoberfläche (3) gerichtet und über eine Tragvorrichtung (11) mit der Verstelleinheit (10) verbunden ist, wobei die optische Erfassungseinheit (4) weiterhin eine oder mehrere Lichtquellen (12) aufweist, welche in unterschiedlichen Winkelstellungen zur Druckzylinderoberfläche (3) auf den zu erfassenden Bereich ausrichtbar oder ausgerichtet sind, wobei die Anordnung eine Reinigungsvorrichtung (13) zum Reinigen der Zylinderoberfläche (3) aufweist.

10. Anordnung nach Anspruch 9, wobei die Reinigungsvorrichtung (13) eine Druckluftquelle zum berührungslosen Reinigen, vorzugsweise mit ionisierter Druckluft, aufweist.

11. Anordnung nach Anspruch 9 bis 10, wobei eine erste der Lichtquellen (12.1) der optischen Erfassungseinheit (4) unter einem Winkel von 0° bis 30° zur optischen Erfassungsachse (6) der optischen Erfassungseinheit (4) auf die Zylinderoberfläche (3) ausgerichtet ist.

12. Anordnung nach Anspruch 9 bis 11, wobei die erste Lichtquelle (12.1) verschwenkbar gelagert, in einer ersten Position in der optischen Erfassungsachse (6) der optischen Erfassungseinheit (4) angeordnet und in einer zweiten Position aus der optischen Erfassungsachse (6) der optischen Erfassungseinheit (4) herausgeschwenkt ist.

13. Anordnung nach einem der Ansprüche 9 bis 12, wobei mindestens eine der Lichtquellen (12) der optischen Erfassungseinheit (4) unter einem Winkel (a) von 30° bis 60° zur optischen Erfassungsachse (6) der optischen Erfassungseinheit (4) auf die Zylinderoberfläche (3) gerichtet ist.

14. Anordnung nach Anspruch 13, wobei die mindestens eine Lichtquelle (12) zwei Teillichtquellen (12.2.1, 12.2.2) aufweist, die gegenüberliegend und symmetrisch zur optischen Erfassungsachse (6) angeordnet sind.

15. Anordnung nach einem der Ansprüche 9 bis 14, wobei die mindestens eine Lichtquelle (12) eine freigeformte Lichtaustrittsöffnung oder eine rechteckige Lichtaustrittsöffnung aufweist, deren Längsabmessung in auf die Zylinderoberfläche (3) ausgerichteter Position parallel zur Zylinderoberfläche (3) verläuft.

16. Anordnung nach einem der Ansprüche 9 bis 15, wobei die optische Erfassungseinheit (4) ferner in zwei Achsen (Y, Z) senkrecht zur Zylinderachse relativ zur Zylinderoberfläche (3) verstellbar ist.

17. Anordnung nach einem der Ansprüche 9 bis 16, wobei die optische Erfassungseinheit (4) eine Zeilenkamera (15) aufweist, die dazu eingerichtet ist, den rotierenden Druckzylinder (1) spaltenweise zu erfassen.

## Claims

1. A method for checking a printing cylinder (1) for defects in an engraved cylinder surface (3) of the printing cylinder (1), comprising the steps of:
- capturing a first and at least one further digital image of a cylinder surface (3) of a printing cylinder (1) by means of an optical detection unit (4), wherein the cylinder surface (3) is cleaned before the at least one further image capture,
- comparing each of the digital images with a digital engraving template of the printing cylinder (1), wherein the comparing comprises:
- determining deviations between each of the digital images and the digital engraving template, and
- checking the determined deviations for matching deviations between the digital images,
wherein a pseudo defect is concluded if no matching deviations between the digital images have been found during the comparing, and wherein an engraving defect on the printing cylinder (1) is concluded in the case of matching deviations.

2. The method according to Claim 1, wherein the cleaning of the cylinder surface (3) is carried out manually or contactlessly and preferably by applying ionized compressed air, wherein dust particles are removed from the cylinder surface or at least redistributed on the cylinder surface.

3. The method according to Claim 1 or 2, wherein the capturing of the digital images comprises rotating the printing cylinder (1), detecting the rotating printing cylinder (1) optically columnwise by means of a camera (15), preferably a line scan camera, and moving the camera (15) relatively in the axial direction of the printing cylinder (1).

4. The method according to any one of the preceding claims, wherein the capturing of the first and each further digital image comprises capturing at least one bright field image (5), in which the cylinder surface (3) is illuminated at an angle between 0° and 30° to the optical detection axis (6) of the optical detection unit (4).

5. The method according to any one of the preceding claims, wherein the capturing of the first and each further digital image comprises capturing at least one dark field image (7) in which the cylinder surface (3) is illuminated at an angle (α) between 30° and 60° to the optical detection axis (6) of the optical detection unit (4).

6. The method according to any one of the preceding claims, which further comprises the step of:
- generating a print-like representation (8) from at least one bright field image (5) of the cylinder surface (3) and at least one dark field image (7) of the cylinder surface (3), wherein the generating comprises:
- extracting a mask for a non-printing area of the printing cylinder (1) from black areas of the dark field image (7), and
- applying the mask to the non-printing area of the printing cylinder (1) in the bright field image (5) to adjust the brightness by shifting the white point.

7. The method according to Claim 6, wherein a binary image is derived from the dark field image (7) for extracting the mask, wherein, in the regions which are black in the dark field image (7), the average brightness value is determined in the bright field image (5), on the basis of which a brightness adjustment by means of white point shift is carried out.

8. The method according to any one of the preceding claims, which further comprises the step of:
- generating a print-like representation (8) from at least one bright field image (5) of the cylinder surface (3), wherein the generating comprises:
- determining a local maximum of a bright range in the brightness histogram of the at least one bright field image (5), which bright range is bright compared with a darker range, wherein the bright range corresponds to a non-printing surface area of the printing cylinder (1);
- establishing a distance by which the white point is shifted, preferably by a multiple of a standard deviation; and
- shifting the white point in the at least one bright field image (5) by the established distance.

9. An arrangement for checking a printing cylinder (1) for defects in an engraved cylinder surface (3) of the printing cylinder (1), configured to carry out the method according to any one of the preceding claims, having an optical detection unit (4) which can be linearly adjusted by means of an adjustment unit (10) along a longitudinal axis (X) of a rotatably mounted printing cylinder (1) and which is directed toward an area to be detected of the printing cylinder surface (3) and is connected to the adjustment unit (10) via a supporting device (11), wherein the optical detection unit (4) furthermore comprises one or more light sources (12) which can be or are aligned with the area to be detected at different angles to the printing cylinder surface (3), wherein the arrangement comprises a cleaning device (13) for cleaning the cylinder surface (3).

10. The arrangement according to Claim 9, wherein the cleaning device (13) comprises a compressed air source for contactless cleaning, preferably with ionized compressed air.

11. The arrangement according to Claim 9 to 10, wherein a first of the light sources (12.1) of the optical detection unit (4) is aligned with the cylinder surface (3) at an angle of 0° to 30° to the optical detection axis (6) of the optical detection unit (4).

12. The arrangement according to Claim 9 to 11, wherein the first light source (12.1), being pivotally mounted, is arranged in a first position in the optical detection axis (6) of the optical detection unit (4) and is pivoted out of the optical detection axis (6) of the optical detection unit (4) in a second position.

13. The arrangement according to any one of Claims 9 to 12, wherein at least one of the light sources (12) of the optical detection unit (4) is directed toward the cylinder surface (3) at an angle (α) of 30° to 60° to the optical detection axis (6) of the optical detection unit (4).

14. The arrangement according to Claim 13, wherein the at least one light source (12) comprises two partial light sources (12.2.1, 12.2.2) which are arranged opposite and symmetrically to the optical detection axis (6).

15. The arrangement according to any one of Claims 9 to 14, wherein the at least one light source (12) comprises a freely shaped light exit opening or a rectangular light exit opening, the longitudinal dimension of which, in the position aligned with the cylinder surface (3), runs parallel to the cylinder surface (3).

16. The arrangement according to any one of Claims 9 to 15, wherein the optical detection unit (4) can further be adjusted in two axes (Y, Z) perpendicular to the cylinder axis relative to the cylinder surface (3).

17. The arrangement according to any one of Claims 9 to 16, wherein the optical detection unit (4) comprises a line scan camera (15) which is configured to detect the rotating printing cylinder (1) columnwise.

## Revendications

1. Procédé destiné à contrôler un cylindre d'impression (1) pour détecter des défauts dans une surface de cylindre gravée (3) du cylindre à imprimer (1), lequel présente les étapes :
- enregistrer une première et au moins une autre image numérique d'une surface de cylindre (3) d'un cylindre d'impression (1) à l'aide d'une unité de détection optique (4), la surface de cylindre (3) étant nettoyée avant l'au moins un autre enregistrement,
- comparer les images numériques respectivement à un modèle de gravure numérique du cylindre d'impression (1), dans lequel la comparaison présente :
- déterminer des écarts entre respectivement une des images numériques et le modèle de gravure numérique et
- vérifier les écarts déterminés par rapport à des écarts concordants entre les images numériques,
dans lequel on conclut à un pseudo-défaut si, lors de la comparaison, aucun écart concordant entre les images numériques n'a été constaté, et dans lequel on conclut à un défaut de gravure sur le cylindre d'impression (1) en cas d'écarts concordants.

2. Procédé selon la revendication 1, dans lequel le nettoyage de la surface de cylindre (3) se fait manuellement ou sans contact et de préférence par une alimentation en air comprimé ionisé, dans lequel les particules de poussière sont enlevées de la surface de cylindre ou au moins redistribuées sur la surface de cylindre.

3. Procédé selon la revendication 1 ou 2, dans lequel l'enregistrement des images numériques comprend la rotation du cylindre d'impression (1), la détection optique par colonnes du cylindre d'impression en rotation (1) à l'aide d'une caméra (15), de préférence une caméra linéaire, et le déplacement relatif de la caméra (15) dans la direction axiale du cylindre d'impression (1).

4. Procédé selon l'une des revendications précédentes, dans lequel l'enregistrement de la première et de l'autre image numérique présente l'enregistrement d'au moins une prise de champ clair (5), dans laquelle la surface de cylindre (3) est éclairée à un angle compris entre 0° et 30° par rapport à l'axe de détection optique (6) de l'unité de détection optique (4).

5. Procédé selon l'une des revendications précédentes, dans lequel l'enregistrement de la première et de l'autre image numérique présente l'enregistrement d'au moins une prise de champ foncé (7), dans laquelle la surface de cylindre (3) est éclairée à un angle (α) compris entre 30° et 60° par rapport à l'axe de détection optique (6) de l'unité de détection optique (4).

6. Procédé selon l'une des revendications précédentes, qui présente en outre les étapes :
- produire une représentation similaire à une impression (8) à partir d'au moins une prise de champ clair (5) de la surface de cylindre (3) et d'au moins une prise de champ foncé (7) de la surface de cylindre (3), dans lequel la production présente :
- extraire un masque pour une région à ne pas imprimer du cylindre d'impression (1) à partir de surfaces noires de la prise de champ foncé (7), et
- appliquer le masque sur la région à ne pas imprimer du cylindre d'impression (1) dans la prise de champ clair (5) pour ajuster la luminosité par décalage du point blanc.

7. Procédé selon la revendication 6, dans lequel pour l'extraction du masque une image binaire est dérivée de la prise de champ foncé (7), dans lequel dans les régions, qui sont noires dans la prise de champ foncé (7), on détermine dans la prise de champ clair (5) la valeur de luminosité moyenne qui permet de réaliser un ajustement de luminosité à l'aide du décalage du point blanc.

8. Procédé selon l'une des revendications précédentes, qui présente en outre les étapes :
- produire une représentation similaire à une impression (8) à partir d'au moins une prise de champ clair (5) de la surface de cylindre (3), dans lequel la production présente :
- déterminer un maximum local d'une région claire par rapport à une région plus foncée dans l'histogramme de luminosité de l'au moins une prise de champ clair (5), dans lequel la région claire correspond à une région de surface à ne pas imprimer du cylindre d'impression (1) ;
- définir une distance à laquelle le point blanc est décalé, de préférence un multiple d'une déviation standard ; et
- décaler le point blanc dans l'au moins une prise de champ clair (5) de la distance définie.

9. Agencement destiné à contrôler un cylindre d'impression (1) pour détecter des défauts dans une surface de cylindre gravée (3) du cylindre d'impression (1), agencé pour exécuter le procédé selon l'une des revendications précédentes, comprenant une unité de détection optique (4), qui peut être réglable linéairement le long d'un axe longitudinal (X) d'un cylindre d'impression (1) monté rotatif à l'aide d'une unité de déplacement (10) et dirigée sur une région à détecter de la surface de cylindre d'impression (3) et reliée à l'unité de déplacement (10) par le biais d'un moyen de support (11), dans lequel l'unité de détection optique (4) présente en outre une ou plusieurs sources de lumière (12) qui peuvent être orientées ou sont orientées sur la zone à détecter dans différentes positions angulaires par rapport à la surface de cylindre d'impression (3), dans lequel le agencement présente un moyen de nettoyage (13) pour nettoyer la surface de cylindre (3).

10. Agencement selon la revendication 9, dans lequel le moyen de nettoyage (13) présente une source d'air comprimé pour le nettoyage sans contact, de préférence avec de l'air comprimé ionisé.

11. Agencement selon les revendications 9 à 10, dans lequel une première des sources de lumière (12.1) de l'unité de détection optique (4) est orientée sur la surface de cylindre (3) à un angle de 0° à 30° par rapport à l'axe de détection optique (6) de l'unité de détection optique (4).

12. Agencement selon les revendications 9 à 11, dans lequel la première source de lumière (12.1) est montée pivotante, disposée dans une première position dans l'axe de détection optique (6) de l'unité de détection optique (4) et dans une seconde position à partir de l'axe de détection optique (6) de l'unité de détection optique (4) est pivoté vers l'extérieur.

13. Agencement selon une des revendications 9 à 12, dans lequel au moins une des sources de lumière (12) de l'unité de détection optique (4) est dirigée sur la surface de cylindre (3) à un angle (α) de 30° à 60° par rapport à l'axe de détection optique (6) de l'unité de détection optique (4).

14. Agencement selon la revendication 13, dans lequel l'au moins une source de lumière (12) présente deux sources de lumière partielles (12.2.1, 12.2.2) qui sont disposées de manière opposée et symétrique par rapport à l'axe de détection optique (6).

15. Agencement selon une des revendications 9 à 14, dans lequel l'au moins une source de lumière (12) présente une ouverture de sortie de lumière de forme libre ou une ouverture de sortie de lumière rectangulaire dont les dimensions longitudinales dans une position orientée sur la surface de cylindre (3) s'étendent parallèlement à la surface de cylindre (3) .

16. Agencement selon une des revendications 9 à 15, dans lequel l'unité de détection optique (4) peut en outre être réglée selon deux axes perpendiculaires à l'axe de cylindre par rapport à la surface de cylindre (3).

17. Agencement selon une des revendications 9 à 16, dans lequel l'unité de détection optique (4) présente une caméra linéaire (15) qui est agencée pour détecter par colonnes le cylindre d'impression (1) en rotation.
